# EUROPEAN PATENT APPLICATION

(11) **EP 4 567 933 A1**
(43) Date of publication of application: **11.06.2025**
(21) Application number: 22953982.0
(22) Date of filing: 02.08.2022
(51) Int. Cl.: H01M 4/587, H01M 4/1393, H01M 4/62

(54) **METHOD FOR MANUFACTURING NEGATIVE ELECTRODE MATERIAL FOR LITHIUM-ION SECONDARY BATTERY, AND METHOD FOR MANUFACTURING LITHIUM-ION SECONDARY BATTERY**

(71) Applicant: Resonac Corporation, Tokyo 105-7325 (JP)
(72) Inventor: MATSUMOTO, Yoshiyuki, Tokyo 100-6606 (JP); UCHIYAMA, Yoshinori, Tokyo 100-6606 (JP); TSUCHIYA, Hideyuki, Tokyo 100-6606 (JP); ONUMA, Hiroo, Tokyo 100-6606 (JP); KAMIJO, Yuichi, Tokyo 105-8518 (JP)
(74) Representative: Berggren Oy
(86) International application number: PCT/JP2022/029713
(87) International publication number: WO 2024/028993

(57) **Abstract**

A method of manufacturing a negative electrode material for a lithium-ion secondary battery, includes (a) a step of obtaining a mixture containing a graphitizable aggregate, and a graphitizable binder; (b) a step of obtaining a molded product by molding the mixture; (c) a step of obtaining a graphitized product by graphitizing the molded product; and (d) a step of obtaining a ground product by grinding the graphitized product, and the binder contains an aqueous binder containing a water-soluble or water-absorbent polymer compound.

## Description

### Technical Field

The present invention relates to a method of manufacturing a negative electrode material for a lithium-ion secondary battery, and a method of manufacturing a lithium-ion secondary battery.

### Background Art

Because lithium-ion secondary batteries have a higher energy density than other secondary batteries such as nickel-cadmium batteries, nickel-hydride batteries, and lead-acid batteries, the lithium-ion secondary batteries are widely used as power sources for portable electrical appliances such as laptop computers and mobile phones. Furthermore, use of lithium-ion secondary batteries has been expected not only for relatively small electrical appliances but also for electric vehicles, power sources for power storage, and the like.

As a material (negative electrode material) of a negative electrode for a lithium-ion secondary battery, graphite is widely used. As the method of manufacturing the negative electrode material using graphite, for example, Patent Literature 1 describes the method of grinding a mixture obtained by mixing a carbon material, a binder, and the like, performing graphitization treatment in a state in which the obtained ground product is molded using a mold, and further grinding the obtained graphitized product.

### [Prior Art Document]

### [Patent Literature]

[Patent Literature] WO 2015/147012

### SUMMARY OF INVENTION

Demand for lithium-ion secondary batteries for electrical appliances, electric vehicles, power sources for power storage, and the like has been increasing, and along with the demand, the improvement of the production efficiency of a negative electrode material for lithium-ion secondary batteries has been required.

From the viewpoint of production efficiency of a negative electrode material for a lithium-ion secondary battery, the inventors have investigated a method of manufacturing a negative electrode material for a lithium-ion secondary battery by molding a mixture containing a graphitizable aggregate and a graphitizable binder, graphitizing the molded product to obtain a graphitized product, and further grinding the graphitized product to obtain a ground material.

In the aforementioned method of manufacturing a negative electrode material for a lithium-ion secondary battery, it is desirable to improve the strength of the molded product from the viewpoint of improving the handleability of the molded product (e.g., the handleability during graphitization treatment) or the like. Furthermore, from the viewpoint of easily manufacturing a negative electrode material for a lithium-ion secondary battery, it is desirable to be able to easily grind the graphitized product when it is graphitized.

In view of the above circumstances, an object of the present disclosure is to provide a method of manufacturing a negative electrode material for a lithium-ion secondary battery, which is capable of manufacturing a molded product having excellent strength and easily grinding a graphitized product, and a method of manufacturing a lithium-ion secondary battery including the method of manufacturing a negative electrode material.

### Solution to Problem

Specific means for achieving the above-mentioned objective include the following aspects.
<1> A method of manufacturing a negative electrode material for a lithium-ion secondary battery, the method comprising:
   (a) a step of obtaining a mixture containing a graphitizable aggregate, and a graphitizable binder;
   (b) a step of obtaining a molded product by molding the mixture;
   (c) a step of obtaining a graphitized product by graphitizing the molded product; and
   (d) a step of obtaining a ground product by grinding the graphitized product, wherein the binder contains an aqueous binder containing a water-soluble or water-absorbent polymer compound.
<2> The method of manufacturing a negative electrode according to <1>, wherein in the step of obtaining the molded product, the mixture is molded to obtain a molded product having a density of 1.25 g/cm³ or more.
<3> A method of manufacturing a negative electrode material for a lithium-ion secondary battery, the method comprising:
   (a) a step of obtaining a mixture containing a graphitizable aggregate, and a graphitizable binder;
   (b) a step of obtaining a molded product having a density of 1.25 g/cm³ or more by molding the mixture;
   (c) a step of obtaining a graphitized product having a density of 1.20 g/cm³ or less by graphitizing the molded product; and
   (d) a step of obtaining a ground product by grinding the graphitized product.
<4> A method of manufacturing a negative electrode material for a lithium-ion secondary battery, the method comprising:
   (a) a step of obtaining a mixture containing a graphitizable aggregate, and a graphitizable binder;
   (b) a step of obtaining a molded product by molding the mixture with an extrusion molding;
   (c) a step of obtaining a graphitized product having a density of 1.50 g/cm³ or less by graphitizing the molded product; and
   (d) a step of obtaining a ground product by grinding the graphitized product.
<5> The method of manufacturing a negative electrode according to <3> or <4>, wherein the binder contains an aqueous binder containing a water-soluble or water-absorbent polymer compound.
<6> The method of manufacturing a negative electrode according to any one of <1>, <2> and <5>, the water-soluble or water-absorbent polymer compound contains at least one selected from the group consisting of starch, amylose, amylopectin, polyacrylic acid, carboxymethylcellulose, polyvinyl alcohol, and water-soluble protein.
<7> The method of manufacturing a negative electrode according to any one of <1>, <2>, <5> and <6>, wherein a content rate of water in the mixture is from 10% by mass to 50% by mass with respect to a total amount of the mixture.
<8> The method of manufacturing a negative electrode according to any one of <1> to <7>, wherein a content rate of the binder in the mixture is from 3% by mass to 30% by mass with respect to a total amount of the mixture.
<9> The method of manufacturing a negative electrode according to any one of <1> to <8>, wherein the aggregate includes calcined coke.
<10> The method of manufacturing a negative electrode according to any one of <1> to <9>, wherein the aggregate includes unheat-treated raw coke.
<11> A method of manufacturing a lithium-ion secondary battery, the method comprising: a step of manufacturing a negative electrode material by the method of manufacturing a negative electrode material for a lithium-ion secondary battery according to any one of <1> to <10>; and a step of producing a negative electrode by using the negative electrode material for a lithium-ion secondary battery.

### Advantageous Effect of Invention

According to the present invention, a method of manufacturing a negative electrode material for a lithium-ion secondary battery, which is capable of manufacturing a molded product having excellent strength and easily grinding a graphitized product, and a method of manufacturing a lithium-ion secondary battery including the method of manufacturing a negative electrode material can be provided.

### DESCRIPTION OF EMBODIMENTS

Hereinafter, embodiments for carrying out the present invention will be described in detail. However, the present invention is not limited to the following embodiments. In the following embodiments, constituent elements (including element steps and the like) are not essential except for a case in which they are especially specified, a case in which they are considered clearly necessary in principle, or the like. The same applies to numerical values and a range thereof, which do not limit the present invention.

In the present disclosure, the term "step" means not only a step independent from other steps, but also a step that is not clearly distinguished from other steps as long as the purpose of the step is achieved.

In the present disclosure, a numerical value range expressed using "to" includes numerical values before and after "to" as a minimum value and a maximum value.

In stepwise numerical value ranges stated in the present disclosure, the upper limit value or the lower limit value stated in one numerical value range may be replaced with the upper limit value or the lower limit value of another stated stepwise numerical value range. In addition, in a numerical value range stated in the present disclosure, the upper limit value or the lower limit value of this numerical value range may be replaced with values shown in Examples.

Regarding each of components in the present disclosure, a plurality of substances corresponding thereto may be contained. In a case in which a plurality of substances corresponding to each of the components is present in a composition, a content rate or a content of each of the components means a total content rate or a total content of a plurality of substances corresponding thereto present in the composition unless otherwise specified.

Regarding each of components in the present disclosure, a plurality of types of particles corresponding thereto may be included. In a case in which a plurality of types of particles corresponding to each of the components is present in the composition, a particle size of each of the components means a value of a mixture of a plurality of types of particles corresponding thereto present in the composition unless otherwise specified.

In the present disclosure, the term "layer" refers to not only a case of being formed over the entire region but also a case of being formed only in a part of the region when observing the region in which the layer is present.

<Method of Manufacturing Negative Electrode Material for Lithium-Ion Secondary Battery>

### [First Embodiment]

A first embodiment of a method of manufacturing a negative electrode material (hereinafter, also referred to as "negative electrode material") for a lithium-ion secondary battery of the present disclosure includes:
(a) a step of obtaining a mixture containing a graphitizable aggregate, and a graphitizable binder;
(b) a step of obtaining a molded product by molding the mixture;
(c) a step of obtaining a graphitized product by graphitizing the molded product; and
(d) a step of obtaining a ground product by grinding the graphitized product,
and the binder contains an aqueous binder containing a water-soluble or water-absorbent polymer compound.

The steps of the above method may be performed consecutively or non-sequentially. The steps of the above method may be performed at the same location or at different locations.

In the manufacturing method of the present embodiment, an aqueous binder containing a water-soluble or water-absorbent polymer compound is used. This improves the strength of the molded product, and therefore improves the handling properties in the subsequent graphitization process or the like. When the strength of the molded product is improved, the graphitized product generally tends to be difficult to grind after the graphitization process. However, in the manufacturing method of the present embodiment, the aforementioned aqueous binder is used, which improves the strength of the molded product and makes it easy to grind the graphitized product.

The reason why the graphitized product can be easily ground while improving the strength of the molded product in the manufacturing method of the present embodiment is presumed to be as follows. Note that the present disclosure is not limited to the following presumption.

In the manufacturing method of the present embodiment, the aggregate is absorbed into the binder swollen with water by using an aqueous binder containing a water-soluble or water-absorbent polymer compound. This makes the surface of the graphitizable aggregate slippery when the mixture is molded, promoting the alignment of the mixture and reducing voids. As a result, the density and strength of the molded product tend to improve. Furthermore, the water not absorbed in the binder fills the gaps between the aggregates, resulting in liquid bridges, and thus improving the strength of the molded product.

In the manufacturing method of the present embodiment, the molded product is heat-treated by heat as necessary, and then graphitized to obtain a graphitized product. Water evaporates during heat treatment, graphitization, or the like by using an aqueous binder. Therefore, the molded product before heat treatment, graphitization, or the like has a high density, but the graphitized product after graphitization has a lower density. This makes it easy to grind the graphitized product.

Furthermore, in the manufacturing method of the present embodiment, the graphitized product can be ground more easily, and as a result, a ground product with a small specific surface area can be obtained. By using a negative electrode material containing a ground product having a small specific surface area for manufacturing a lithium-ion secondary battery, the contact area between the negative electrode material and an electrolytic solution can be reduced. Thereby, the decomposition reaction of the electrolytic solution is reduced, and the life of the battery can be lengthened. As a result, the cycle characteristics of the lithium-ion secondary battery are excellent.

Previously, when raw coke was used, there was the problem that molding was difficult and the strength of the molded product was low, and it was necessary to improve the moldability and strength of the molded product by subjecting the raw coke to heat treatment, or the like. On the other hand, in the manufacturing method of the present embodiment, even if raw coke is used without heat treatment, a molded product with excellent moldability and high strength can be obtained. Therefore, as a graphitizable aggregate, raw coke that is heat treated (calcined coke) can be used to form a molded product, or raw coke that is unheat treated can be used to form a molded product.

In the manufacturing method of the present embodiment, since the molded product has excellent strength, it is not necessary to pack the mixture into a graphitization crucible or the like when graphitizing it. In other words, it is not necessary to use a graphitization crucible or the like, and graphitization is possible by placing only the molded product in a graphitization furnace. Therefore, compared to the use of a graphitization crucible or the like, the manufacturing efficiency of the negative electrode material for a lithium-ion secondary battery tends to be excellent.

Usually, the strength of the molded product can be increased by increasing the amount of graphitizable binder. However, when the amount of graphitizable binder is excessive, the density of the graphitized product is high, and the graphitized product tends to be difficult to grind, and the battery characteristics such as the initial charge/discharge efficiency of the negative electrode material tend to decrease. In the present embodiment, it is possible to increase the strength of the molded product without increasing the amount of graphitizable binder, and it is also possible to prevent the deterioration of the battery characteristics due to the excessive use of the binder. Furthermore, by reducing the amount of binder, it becomes easy to apply a hard carbon-derived coating to the surface of the ground product, and the input characteristics of a lithium-ion secondary battery also tend to be improved.

In the step (a), a mixture containing a graphitizable aggregate and a graphitizable binder is obtained. The aforementioned graphitizable binder contains an aqueous binder containing a water-soluble or water-absorbent polymer compound. The method of obtaining the mixture is not particularly limited, and can be performed using a kneader or the like. The mixing can be performed at room temperature or with heating. When an aqueous binder is used, pitch, tar, or the like is not used as the graphitizable binder, or the amount of pitch, tar, or the like used can be reduced. Therefore, it is not necessary to perform mixing at a temperature at which the graphitizable binder softens, and a process such as heating can be omitted.

The time for mixing the graphitizable aggregate and the graphitizable binder by kneading or the like is not particularly limited, and may be, for example, from 10 seconds to 30 minutes, may be from 30 seconds to 20 minutes, or may be from 1 minute to 15 minutes. By increasing the mixing time, the density and strength of the molded product tend to be improved.

The graphitizable aggregate is not particularly limited as long as it is graphitized by graphitization treatment. Specific examples thereof include coke such as fluid coke, needle coke, and mosaic coke, among them, from the viewpoint of enabling to easily grind the graphitized product by reducing the increase in the density of the graphitized product manufactured, the needle coke is preferably used. The graphitizable aggregate is preferably particulate.

The mixture may contain one or more types of graphitizable aggregate.

When coke is used as the graphitizable aggregate, the coke may contain calcined coke from the viewpoint of improving the strength of the molded product. **In** the manufacturing method of the embodiment, raw coke that is unheat-treated may be used to form the molded product, since this provides superior strength to the molded product.

When the graphitizable aggregate is particulate, the average particle size of the graphitizable aggregate is preferably from 5 µm to 40 µm, more preferably from 8 µm to 30 µm, and still more preferably from 8 µm to 25 µm. The average particle size is, for example, a volume average particle size (D50) measured by a laser diffraction/scattering method described below. The volume average particle size (D50) means a particle size at cumulative 50% when drawing a volume cumulative distribution curve from the small particle size side in the particle size distribution.

For example, the standard deviation of the particle size distribution of the graphitizable aggregate is preferably 0.25 or less, more preferably 0.20 or less, still more preferably 0.18 or less and particularly preferably 0.16 or less. When the aforementioned standard deviation of the particle size distribution of the aggregate is 0.20 or less, variation in the particle size of the aggregate is reduced, and variation in the particle size of the obtained ground product is also reduced. By using the negative electrode material, which includes the ground product with small variation in the particle size, in the production of a lithium-ion secondary battery, the resistance distribution in the negative electrode can be made uniform, and as a result, the quick charging performance of the lithium-ion secondary battery tends to improve. Further, by reducing the variation in the particle size of the aggregate, the function as a binder can be suitably secured, even if a content rate or a content of the graphitizable binder is reduced. The standard deviation of the particle size distribution is, for example, a value (volume basis) measured by the laser diffraction/scattering method.

The lower limit of the standard deviation of the particle size distribution of the graphitizable aggregate is not particularly limited, and for example, may be 0.05 or more, or may be 0.10 or more.

Examples of methods of adjusting the average particle size of the graphitizable aggregate and the standard deviation of the particle size distribution of the graphitizable aggregate to the aforementioned ranges include sieve classification, wind power classification, wet classification and the like.

The graphitizable binder is not particularly limited as long as it contains an aqueous binder containing a water-soluble or water-absorbent polymer compound, and it is graphitized by a graphitization treatment. Examples of the aqueous binder include a composition containing a water-soluble or water-absorbent polymer compound and water. The graphitizable binder may contain one type of a water-soluble or water-absorbent polymer compound, or may contain two or more types of a water-soluble or water-absorbent polymer compounds.

The adhesive strength of the aqueous binder is preferably 0.2N or more from the viewpoint of restraining cracks in the molded body or the like, and preferably 0.4N or more from the viewpoint of obtaining a molded body with superior strength. The adhesive strength of the aqueous binder is measured as follows. First, 25g of binder and 100g of water are mixed for 1 hour with a roller mixer to prepare a sample. 20g to 30g of the sample is filled into a mold with a diameter of 20mm, and the sample is pressed 10mm at a descending speed of 60mm/min using a small tabletop tester EZ-S made by Shimadzu Corporation, and then a tensile test is performed at an ascending speed of 600mm/min to determine the adhesive strength. The adhesive strength of the aqueous binder tends to increase as the binder concentration increases, and by maintaining the moisture content by keeping the binder concentration below a certain level, the binder's function can be fully exerted and the binding strength tends to be maintained.

The graphitizable binder may contain a component other than an aqueous binder, for example, may contain a coal-based, petroleum-based, or artificial pitche or tar, a thermoplastic resin, a thermosetting resin or the like.

The water-soluble or water-absorbent polymer compound is not particularly limited, and may, for example, contain at least one selected from the group consisting of starch, amylose, amylopectin, polyacrylic acid, carboxymethylcellulose, polyvinyl alcohol, and water-soluble protein.

The content rate of the aqueous binder in the graphitizable binder is preferably from 50% by mass to 100% by mass, more preferably from 70% by mass to 100% by mass, and still more preferably from 90% by mass to 100% by mass, with respect to the total amount of the binder.

**In** the present disclosure, the aqueous binder means a composition containing water, a water-soluble or water-absorbent polymer compound that functions as a binder, and a water-soluble or water-absorbent monomer component that is optionally contained.

From the viewpoint of moldability and strength of the molded product, the content rate of water in the mixture is preferably from 10% by mass to 50% by mass, more preferably from 12% by mass to 40% by mass, and still more preferably from 15% by mass to 35% by mass, with respect to the total amount of the mixture.

From the viewpoint of moldability and strength of the molded product, the content rate of the water-soluble or water-absorbent polymer compound is preferably from 10% by mass to 70% by mass, more preferably from 15% by mass to 60% by mass, and still more preferably from 15% by mass to 50% by mass, with respect to the total amount of the binder.

From the viewpoint of moldability and strength of the molded product, the content rate of the water-soluble or water-absorbent polymer compound in the mixture is preferably from 3% by mass to 30% by mass, more preferably from 4% by mass to 25% by mass, and still more preferably from 5% by mass to 20% by mass, with respect to the total amount of the mixture.

From the viewpoint of moldability and strength of the molded product, the content rate of water in the aqueous binder is preferably from 30% by mass to 90% by mass, more preferably from 40% by mass to 85% by mass, and still more preferably from 50% by mass to 85% by mass, with respect to the total amount of the binder.

The mixture may contain another component other than the graphitizable aggregate, or the graphitizable binder. Examples of another component include an aromatic compound, graphite, a dispersant, and a graphitization catalyst.

The aromatic compound is not particularly limited as long as it is a compound having an aromatic ring. The aromatic compound may be a compound having an aromatic ring and a molecular weight of 500 or less or may be a compound having an aromatic ring and a molecular weight of 300 or less.

Examples of the aromatic compound include naphthalene, methylnaphthalene such as 1-methylnaphthalene, 2-methylnaphthalene or the like, acenaphthene, biphenyl, fluorene, benzopyrene, benzanthracene, dibenzanthracene, diphenylene oxide, quinoline, isoquinoline and the like.

The aromatic compound contained in the mixture may be only one component or two or more components.

Among them, the aromatic compound is preferably methylnaphthalene, naphthalene or the like from the viewpoint of moldability when molding the molded product.

When the mixture contains the aromatic compound, the amount is not particularly limited. The content rate of the aromatic compound in the mixture is preferably 1% by mass or less, more preferably 0.5% by mass or less, and still more preferably 0% by mass with respect to a total amount of the mixture.

The mixture may contain the graphite. Examples of the graphite include natural graphite and artificial graphite. The graphite is preferably particulate. The mixture may contain only one type of graphite, or may contain two or more types of graphite.

The mixture preferably contains the dispersant from the viewpoint of easily dispersing the components in the mixture in the step (b). When the mixture contains the dispersant, the variation in the particle size of the ground product obtained by grinding the graphitized product can be reduced, and the ground product whose particle size is made uniform can be easily obtained. As a result, the quick charging performance of the lithium-ion secondary battery tends to improve.

Further, the inclusion of the dispersant in the mixture leads to a reduction in the amount of the graphitizable binder, and can be expected to improve battery characteristics such as the initial charge and discharge efficiency of the negative electrode material.

The type of the dispersant is not particularly limited. Specific examples thereof include hydrocarbons such as liquid paraffin, paraffin wax, and polyethylene wax; fatty acids such as stearic acid, oleic acid, erucic acid, and 12-hydroxystearic acid; fatty acid metal salts such as zinc stearate, lead stearate, aluminum stearate, calcium stearate, and magnesium stearate; fatty acid amides such as stearic acid amides, oleic acid amides, erucic acid amides, methylenebisstearic acid amides, and ethylenebisstearic acid amides; fatty acid esters such as stearic acid monoglyceride, stearyl stearate, and hardened oils; higher alcohols such as stearyl alcohol and the like. Among them, fatty acids are preferable, and stearic acid is more preferable, from the viewpoint that they are less likely to affect the performance of the negative electrode material, are easily handled because they are solid at room temperature, disappear in a process before graphitization treatment, and are inexpensive.

In a case in which the mixture contains the dispersant, the amount thereof is not particularly limited. For example, the content rate of the dispersant with respect to the whole mixture may be from 0.1% by mass to 20% by mass, may be from 0.5% by mass to 10% by mass, or may be from 0.5% by mass to 5% by mass.

The mixture preferably contains the graphitization catalyst from the viewpoint of promoting the graphitization of the graphitizable aggregate or the graphitizable binder. The type of the graphitization catalyst is not particularly limited. Specifically, examples of the graphitization catalysts include substances having a graphitization catalyst action such as silicon, iron, nickel, titanium, and boron; and carbides, oxides, and nitrides of these substances.

In a case in which the mixture contains the graphitization catalyst, the amount thereof is not particularly limited. For example, the content rate of the graphitization catalyst with respect to the whole mixture may be from 0.1% by mass to 50% by mass, may be from 0.5% by mass to 40% by mass, or may be from 0.5% by mass to 30% by mass.

In the step (b), the mixture obtained in the step (a) is molded to obtain the molded product. Preferably, the mixture may be formed into a predetermined shape by a uniaxial press or the like. By molding in this way, it is possible to increase a filling amount in a graphitizing furnace, when graphitizing the mixture, to improve productivity and to improve the effect of the graphitization catalyst.

In the step (b), the method of molding the mixture is not particularly limited. Examples of the method include a molding method in which the mixture is placed in a container such as a mold and pressed in a uniaxial direction, a vibration molding method in which the mixture is placed in a container such as a mold, a heavy weight is placed on the upper surface, and vibration and impact are applied to the mold, and an extrusion molding method in which the mixture is extruded from a nozzle or the like with a horizontal push press.

In the step (b), it is preferable to obtain a molded product by molding the mixture by an extrusion molding. The mixture is molded by extrusion molding, and thus the manufacturing efficiency of the molded product is excellent, the density of the molded product is improved, and the handleability is improved. When extrusion molding is usually performed, the density of the molded product is high, and the density of the graphitized product is also high, which is likely to cause a problem that the graphitized product cannot be easily ground. However, in the present embodiment, water evaporates during heat treatment, graphitization, or the like so that the density of the graphitized product is reduced and the graphitized product can be easily ground even when extrusion molding is adopted.

In the step (b), the density of the obtained molded product is not particularly limited, and it may be 0.90 g/cm³ or more, may be 0.95 g/cm³ or more, may be 1.00 g/cm³ or more, may be 1.25 g/cm³ or more, may be 1.30 g/cm³ or more, or may be more than 1.30 g/cm³. The density of the obtained molded product may be 1.70 g/cm³ or less, may be 1.60 g/cm³ or less, or may be 1.50 g/cm³ or less.

In the manufacturing method of the present embodiment, since an aqueous binder is used, when the density of the molded product is relatively low (for example, less than 1.25 g/cm³), the strength of the molded product tends to be improved. By using an aqueous binder, water evaporates during heat treatment, graphitization, or the like, so that when the density of the molded product is relatively high (for example, 1.25 g/cm³ or more), the density of the graphitized product tends to decrease. As a result, the graphitized product can be easily ground, and a ground product with a small specific surface area tends to be obtained. By using a negative electrode material containing the ground product with a small specific surface area for the manufacture of a lithium-ion secondary battery, the contact area of the negative electrode material with an electrolytic solution can be reduced. As a result, the decomposition reaction of the electrolytic solution can be restrained, the life of the battery can be extended, and a lithium-ion secondary battery with excellent cycle characteristics tends to be manufactured.

Heat treatment is preferably performed on the molded product obtained in the step (b) before the molded product is graphitized in the step (c). By performing the heat treatment, an organic component that is contained in the mixture and that does not contribute to the graphitization is removed, and gas generation in the graphitization treatment or the like tends to be reduced.

The temperature of the above-mentioned heat treatment is not particularly limited, and is preferably lower than a heat treatment temperature in the step (c). For example, the above-mentioned heat treatment may be performed in the range of 500°C to 1000°C.

In the step (c), the molded product obtained in the step (b) is graphitized. A method of graphitizing the molded product is not particularly limited as long as the graphitizable components contained in the mixture can be graphitized. For example, a method of heat-treating the mixture in an atmosphere in which the mixture is difficult to oxidize can be mentioned. The atmosphere in which the mixture is difficult to oxidize is not particularly limited, and examples thereof include inert atmospheres such as nitrogen and argon, and vacuum.

For example, the temperature of the heat treatment for the graphitization may be 1500°C or more, may be 2000°C or more, may be 2500°C or more, or may be 2800°C or more. The upper limit of the temperature of the heat treatment is not particularly limited, and for example, may be 3200°C or less. When the temperature of the heat treatment is 1500°C or more, the graphitization tends to proceed easily due to changes in crystals. When the temperature of the heat treatment is 2000°C or more, graphite crystals tend to develop better. On the other hand, when the temperature of the heat treatment for the graphitization is 3200°C or less, sublimation of a part of the graphite tends to be reduced.

In the step (c), the density of the obtained graphitized product is not particularly limited, and from the viewpoint of the handleability, and for example, it may be 0.80 g/cm³ or more, may be 0.85 g/cm³ or more, or may be 0.90 g/cm³ or more. From the viewpoint of ease of grinding the graphitized product, the obtained graphitized product may be 1.50 g/cm³ or less, may be 1.30 g/cm³ or less, may be 1.20 g/cm³ or less, may be 1.15 g/cm³ or less, may be 1.12 g/cm³ or less, or may be 1.10 g/cm³ or less.

In the step (d), the graphitized product obtained in the step (c) is ground to obtain the ground product. The methods of the grinding is not particularly limited, and the grinding can be performed by a known method using a jet mill, a vibration mill, a pin mill, a hammer mill or the like. The ground product may be adjusted in particle size so as to have a desired size. A method of adjusting the particle size is not particularly limited, and examples thereof include a method using the above-mentioned grinding device, a method using a sieve and the like.

As necessary, (e) a step of disposing low crystalline carbon on at least a part of the surface of the ground product, (f) a step of mixing the ground product with another negative electrode active material, or the like may be performed to the ground product obtained in the step (d).

Examples of a method of disposing the low crystalline carbon on at least a part of the surface of the ground product in the step (e) include a method of mixing a material capable of being the low crystalline carbon by heat treatment (resin or the like) and the ground product and heat-treating the mixture. In a case in which the low crystalline carbon is disposed on at least a part of the surface of the ground product, input and output characteristics such as rapid charge and discharge characteristics of the lithium-ion secondary battery in which the ground product is used as the negative electrode material tend to be improved.

In the step (f), the method of mixing the ground product with another negative electrode active material is not particularly limited. By mixing the ground product with another negative electrode active material, the desired characteristics of the lithium-ion secondary battery can be improved as compared with the case in which only the ground product is used as the negative electrode active material. Examples of another negative electrode active material include graphite particles such as natural graphite and artificial graphite, particles containing an element capable of occluding and releasing lithium-ions and are not limited to the above. The element capable of occluding and releasing lithium-ions are not particularly limited, and examples thereof include Si, Sn, Ge, In and the like.

The ground product obtained in the step (f) may include particles in a state in which a plurality of the flat graphite particles is aggregated or bonded, or may include particles (hereinafter, also referred to as graphite secondary particles) in a state in which a plurality of the flat graphite particles is aggregated or bonded such that main surfaces of the flat graphite particles are not parallel to each other.

In a case in which the ground product is in a state of the graphite secondary particles, the phenomenon that the particles of the negative electrode material are oriented along the direction of a current collector when the press is performed to increase the density of the negative electrode, is prevented, and the path of lithium-ions entering and exiting from the negative electrode material tends to be sufficiently secured.

Further, by including the particles in a state in which a plurality of the flat graphite particles is aggregated or bonded, voids between a plurality of the flat graphite particles reduce the effect of pressure applied during pressing to individual graphite particles and disruption of the graphite particles, generation of cracks, or the like tends to be prevented.

In the present disclosure, "the flat graphite particles" refers to non-spheroidal graphite particles having anisotropy in shape. Examples of the flat graphite particles include graphite particles having a scaly shape, a flaky shape, a partially lumpy shape, or the like.

The aspect ratio represented by A/B of the flat graphite particles is preferably, for example, from 1.2 to 20, and is more preferably from 1.3 to 10 when A is a length in a major axis direction and B is a length in a minor axis direction. When the aspect ratio is 1.2 or more, a contact area between particles increases, and conductivity tends to be further improved. When the aspect ratio is 20 or less, input and output characteristics such as rapid charge and discharge characteristics of the lithium-ion secondary battery tend to be further improved.

The aspect ratio is obtained by observing graphite particles with a microscope, arbitrarily selecting 100 graphite particles, measuring A/B of each of the selected particles, and obtaining an arithmetic mean value of the measured values. In observing the aspect ratio, the length A in the major axis direction and the length B in the minor axis direction are measured as follows. That is, in a projected image of graphite particles that is observed using a microscope, two parallel tangent lines circumscribing the outer periphery of the graphite particles, which are a tangent line a1 and a tangent line a2 having a maximum distance therebetween, are selected, and a distance between the tangent line a1 and the tangent line a2 is defined as the length A in the major axis direction. In addition, two parallel tangent lines circumscribing the outer periphery of the graphite particles, which are a tangent line b1 and a tangent line b2 having a minimum distance, are selected, and a distance between the tangent line b1 and the tangent line b2 is defined as the length B in the minor axis direction.

In the present disclosure, the phrase "main surfaces are not parallel" regarding the graphite secondary particles means that the largest cross-sectional surfaces (the main surfaces) of a plurality of the flat graphite particles are not aligned in a certain direction. Whether or not the main surfaces of a plurality of flat graphite particles are not parallel to each other can be confirmed by microscopic observation. When a plurality of flat graphite particles is aggregated or bonded in a state in which the main surfaces of the graphite secondary particles are not parallel to each other, an increase in an orientation index of the main surfaces of the flat graphite particles in the negative electrode is prevented, expansion of the negative electrode due to charging is prevented, and thereby cycle characteristics of the lithium-ion secondary battery tend to be improved.

Graphite secondary particles may partially include a structure in which a plurality of the flat graphite particles is aggregated or bonded such that the main surfaces of the flat graphite particles are parallel to each other.

In the present disclosure, the phrase "state of being aggregated or bonded" regarding a plurality of the flat graphite particles means a state in which two or more flat graphite particles are aggregated or bonded. The term "bonded" means a state in which particles are chemically bonded to each other directly or via a carbon substance. The term "aggregated" means a state in which particles are not chemically bonded to each other, but a shape of an aggregate is maintained due to a shape thereof. The flat graphite particles may be aggregated or bonded via a carbon substance. Examples of carbon substances include a graphitized product of the graphitizable binder. A state in which the two or more flat graphite particles are bonded via the carbon substance is preferable from the viewpoint of mechanical strength. Whether or not the flat graphite particles are aggregated or bonded can be confirmed by, for example, observation with a scanning electron microscope.

For example, the average particle size of the flat graphite particles is preferably from 1 µm to 50 µm, more preferably from 1 µm to 25 µm, and still more preferably from 1 µm to 15 µm, from the viewpoint of ease of aggregation or bonding. Examples of a method of measuring the average particle size of the flat graphite particles includes a method of measuring it with a scanning electron microscope, and for example the average particle size of the flat graphite particles is an arithmetic mean value of the particle sizes of 100 graphite particles.

The flat graphite particles and the raw material thereof are not particularly limited and examples thereof include artificial graphite, scaly natural graphite, flaky natural graphite, coke, resin, tar, pitch and the like. Among them, graphite obtained from artificial graphite, natural graphite, or coke has high crystallinity and becomes soft particles, so that the density of the negative electrode tends to be easily increased.

The negative electrode material may include spheroidal graphite particles. In a case in which the negative electrode material includes spheroidal graphite particles, because the spheroidal graphite particles themselves have a high density, there is a tendency to reduce the press pressure required to obtain a desired electrode density.

Examples of the spheroidal graphite particles include spheroidal artificial graphite, spheroidal natural graphite and the like. The spheroidal graphite particles are preferably high density graphite particles from the viewpoint of densification of the negative electrode. Specifically, the spheroidal graphite particles that have been subjected to particle spheroidization treatment to increase the tap density are preferable. Further, there is a tendency that the negative electrode material layer containing the spheroidal natural graphite is excellent in peeling strength, and is less likely to peel off from a current collector even if the layer is pressed with strong strength.

In a case in which the negative electrode material includes the spheroidal graphite particles, the negative electrode material may include the above-mentioned flat graphite particles and the spheroidal graphite particles. In a case in which the negative electrode material includes the above-mentioned flat graphite particles and the spheroidal graphite particles, the ratio of the two kinds of particles is not particularly limited, and can be set according to a desired electrode density, pressure conditions at the time of pressing, desired battery characteristics, or the like.

Examples of a case in which the negative electrode material includes the flat graphite particles and the spheroidal graphite particles include a state in which the flat graphite particles and the spheroidal graphite particles are mixed, a state in which the flat graphite particles and the spheroidal graphite particles are bonded (hereinafter, also referred to as composite particles). Examples of the composite particles include particles in a state in which the flat graphite particles and the spheroidal graphite particles are bonded via an organic carbide.

For example, the above-mentioned composite particles can be manufactured by using a mixture containing the flat graphite particles or the raw material thereof and the spheroidal graphite particles as the mixture in the step (a).

The average particle size of the negative electrode material manufactured by the above-mentioned method is not particularly limited. For example, the average particle size is preferably from 5 µm to 40 µm, more preferably from 10 µm to 30 µm, and still more preferably from 10 µm to 25 µm. For example, the average particle size of the negative electrode material may be measured by a scanning electron microscope in the same manner as the average particle size of the above-mentioned flat graphite particles or may be a volume average particle size (D50) measured by the laser diffraction/scattering method.

Examples of methods of measuring the average particle size in a case in which an electrode (negative electrode) is manufactured using the negative electrode material, include a method in which a sample electrode is produced, and this electrode is embedded in an epoxy resin and then mirror-polished to observe an electrode cross-sectional surface with a scanning electron microscope (for example, "VE-7800" manufactured by KEYENCE CORPORATION), and a method in which an electrode cross-sectional surface is produced using an ion milling device (for example, "E-3500" manufactured by Hitachi High-Tech Corporation) and the average particle size is measured with a scanning electron microscope (for example, "VE-7800" manufactured by KEYENCE CORPORATION). The average particle size in this case is a median value of 100 particle sizes arbitrarily selected from the observed particles.

For example, the above-mentioned sample electrode can be produced in the following method. A mixture of 98 parts by mass of the negative electrode material, 1 part by mass of styrene-butadiene resin as a binder, and 1 part by mass of carboxymethyl cellulose as a thickener is used as a solid content, and water is added thereto to prepare a dispersion liquid. The sample electrode is produced by applying the dispersion liquid onto a copper foil having a thickness of 10 µm so as to have a thickness of about 70 µm (at the time of coating), and then drying at 105°C for 1 hour.

The orientation index of the negative electrode (in a case in which the production of the negative electrode involves a pressing process, the negative electrode after pressing) made of the negative electrode material may be 40 or less, may be 20 or less, or may be 15 or less. The above-mentioned orientation index may be 10 or more.

The orientation index of the negative electrode material is an index showing the degree of orientation of particles of the negative electrode material contained in the negative electrode. A low orientation index means that the particles of the negative electrode material are oriented in random directions. That is, this means that graphite particles are prevented from being oriented along a surface of the current collector by a pressure at the time of pressing.

In the present disclosure, the orientation index of the negative electrode is determined by measuring a surface of a sample electrode by an X-ray diffractometer using Cu Kα rays as an X-ray source. Specifically, an X-ray diffraction pattern is measured for the surface of the sample electrode, and the orientation index is determined from an intensity of a carbon (004) plane diffraction peak detected at around a diffraction angle of 2θ = 53° to 56° and a carbon (110) plane diffraction peak detected at around a diffraction angle of 2θ = 70° to 80° by Formula (1). (004) plane diffraction peak intensity/(110) plane diffraction peak intensity...

The specific surface area of the negative electrode material is preferably 3.0 m²/g or less, more preferably 2.8 m²/g or less, still more preferably from 0.5 m²/g to 2.5 m²/g, and particularly preferably from 0.7 m²/g to 2.0 m²/g, from the viewpoint of the cycle characteristics and preservation characteristics.

The specific surface area of the negative electrode material may be determined by the following method. A mixed gas of nitrogen and helium (nitrogen: helium = 3: 7), and a specific surface area/pore distribution measuring device (for example, Flowsorb III 2310, Shimadzu Corporation) are used and nitrogen adsorption at the liquid nitrogen temperature (77K) is measured by a one-point method with a relative pressure of 0.3 to determine the specific surface area by a BET method.

### [Second Embodiment]

A second embodiment of a negative electrode material of the present disclosure include:
(a) a step of obtaining a mixture containing a graphitizable aggregate, and a graphitizable binder;
(b) a step of obtaining a molded product having a density of 1.25 g/cm³ or more by molding the mixture;
(c) a step of obtaining a graphitized product having a density of 1.20 g/cm³ or less by graphitizing the molded product; and
(d) a step of obtaining a ground product by grinding the graphitized product.

In the present disclosure, the necessary and preferred configurations in each embodiment may be appropriately combined. The preferred conditions for steps (b) and (c) other than the density of the molded product and the density of the graphitized product are the same as the preferred conditions for steps (b) and (c) in the aforementioned first embodiment.

In the manufacturing method of the present embodiment, the density of the molded product obtained by the step (b) is 1.25 g/cm³ or more, and thus the strength of the molded product is improved. Therefore, the handleability in subsequent graphitization treatment or the like is also improved. The density of the graphitized product obtained in the step (c) is 1.20 g/cm³ or less, which makes it easy to grind the graphitized product.

Furthermore, in the manufacturing method of the present embodiment, the graphitized product can be ground more easily, and as a result, a ground product with a small specific surface area can be obtained. By using a negative electrode material containing a ground product having a small specific surface area for manufacturing a lithium-ion secondary battery, the contact area between the negative electrode material and an electrolytic solution can be reduced. Thereby, the decomposition reaction of the electrolytic solution is reduced, and the life of the battery can be lengthened. As a result, the cycle characteristics of the lithium-ion secondary battery are excellent.

In the manufacturing method of the present embodiment, the method of molding the mixture in step (b) is not particularly limited. Examples thereof include the aforementioned molding method, vibration molding method, extrusion molding method, or the like. From the viewpoint of reducing the density of the graphitized product, the molding method or vibration molding method is preferable.

In the manufacturing method of the present embodiment, from the viewpoint of suitably reducing the density of the graphitized product obtained in the step (c), the graphitizable binder may contain an aqueous binder containing a water-soluble or water-absorbent polymer compound. The preferable form of the aqueous binder is the same as that of the first embodiment.

In the step (b), the density of the obtained molded product is 1.25 g/cm³ or more, may be 1.30 g/cm³ or more, or may be more than 1.30 g/cm³. The density of the obtained molded product may be 1.70 g/cm³ or less, may be 1.60 g/cm³ or less or may be 1.55 g/cm³ or less.

In the step (c), the density of the obtained graphitized product is 1.20 g/cm³ or less, may be 1.12 g/cm³ or less, or may be 1.10 g/cm³ or less. The density of the obtained graphitized product may be 0.80 g/cm³ or more, may be 0.85 g/cm³ or more or may be 0.90 g/cm³ or more.

### [Third Embodiment]

A third embodiment of a negative electrode material of the present disclosure include:
(a) a step of obtaining a mixture containing a graphitizable aggregate, and a graphitizable binder;
(b) a step of obtaining a molded product by molding the mixture with an extrusion molding;
(c) a step of obtaining a graphitized product having a density of 1.50 g/cm³ or less by graphitizing the molded product; and
(d) a step of obtaining a ground product by grinding the graphitized product.

In the present disclosure, the necessary and preferred configurations in each embodiment may be appropriately combined. The preferred conditions for steps (b) and (c) other than the molding method of the molded product and the density of the graphitized product are the same as the preferred conditions for steps (b) and (c) in the aforementioned first embodiment.

In the manufacturing method of the present embodiment, the molded product is obtained by an extrusion molding in the step (b), and thus the strength of the molded product is improved. Therefore, the handleability in subsequent graphitization treatment or the like is also improved. The density of the graphitized product obtained in the step (c) is 1.50 g/cm³ or less, which makes it comparably easy to grind the graphitized product.

In the manufacturing method of the present embodiment, from the viewpoint of suitably reducing the density of the graphitized product obtained in the step (c), the graphitizable binder may contain an aqueous binder containing a water-soluble or water-absorbent polymer compound. The preferable form of the aqueous binder is the same as that of the first embodiment.

In the step (b), the density of the obtained molded product may be 1.25 g/cm³ or more, may be 1.30 g/cm³ or more, or may be more than 1.30 g/cm³. The density of the obtained molded product may be 1.70 g/cm³ or less, may be 1.60 g/cm³ or less or may be 1.55 g/cm³ or less.

In the step (c), the density of the obtained graphitized product is 1.50 g/cm³ or less, may be 1.20 g/cm³ or less, may be 1.15 g/cm³ or less, may be 1.12 g/cm³ or less, or may be 1.10 g/cm³ or less. The density of the obtained graphitized product may be 0.80 g/cm³ or more, may be 0.85 g/cm³ or more or may be 0.90 g/cm³ or more.

In the manufacturing method of the present embodiment, unheat-treated raw coke may be used to form the molded product because the molded product has excellent strength. Furthermore, by using unheat-treated raw coke, it is possible to suitably reduce the density of the graphitized product obtained in the step (c), which makes it easier to grind the graphitized product.

### <Method of manufacturing lithium-ion secondary battery>

A method of manufacturing a lithium-ion secondary battery of the present disclosure includes a step of manufacturing a negative electrode material by the above-mentioned method of manufacturing the negative electrode material; and a step of producing a negative electrode by using the negative electrode material.

The method of manufacturing the negative electrode using the negative electrode material is not particularly limited. For example, a method of forming the negative electrode material layer on the current collector using a composition containing the negative electrode material, the binder, and a solvent, and if necessary, performing heat treatment, pressing, or the like, can be mentioned.

The binder contained in the composition is not particularly limited. Examples thereof include styrene-butadiene rubber; polymer compounds in which an ethylenically unsaturated carboxylic acid ester (methyl (meth)acrylate, ethyl (meth)acrylate, butyl (meth)acrylate, hydroxyethyl (meth)acrylate, or the like) is used as a polymerization component; polymer compounds in which an ethylenically unsaturated carboxylic acid (acrylic acid, methacrylic acid, itaconic acid, fumaric acid, maleic acid, or the like) is used as a polymerization component; and polymer compounds such as polyvinylidene fluoride, polyethylene oxide, polyepichlorohydrin, polyphosphazene, polyacrylonitrile, polyimide, and polyamideimide. **In** the present disclosure, (meth)acrylate means either of methacrylate or acrylate, or both of methacrylate and acrylate.

The solvent contained in the composition is not particularly limited. Specifically, an organic solvent such as N-methylpyrrolidone, dimethylacetamide, dimethylformamide, γ-butyrolactone or the like; or water is used.

The composition may contain a thickener for adjusting a viscosity, if necessary. Examples of the thickeners include carboxymethyl cellulose, methyl cellulose, hydroxymethyl cellulose, ethyl cellulose, polyvinyl alcohol, polyacrylic acid and salts thereof, oxidized starch, phosphorylated starch, casein and the like.

The composition may contain a conductive auxiliary agent, if necessary. Examples of the conductive auxiliary agents include carbon black, graphite, acetylene black, conductive oxides, conductive nitrides and the like.

A material and a shape of the current collector used in the production of the negative electrode are not particularly limited. For example, it is possible to use a material such as a strip-shaped foil, a strip-shaped perforated foil, or a strip-shaped mesh made of a metal or alloy such as aluminum, copper, nickel, titanium, or stainless steel. Furthermore, it is also possible to use a porous material such as a porous metal (foamed metal) or carbon paper.

A method of forming the negative electrode material layer on the current collector using the composition is not particularly limited, and it can be performed by a known method such as a metal mask printing method, an electrostatic coating method, a dip coating method, a spray coating method, a roll coating method, a doctor blade method, a gravure coating method, or a screen printing method. **In** a case of integrating the negative electrode material layer and the current collector, it can be performed by a known method such as rolling, pressing, or a combination thereof.

After forming the negative electrode material layer on the current collector, heat treatment (drying) may be performed. By the heat treatment, the solvent contained in the negative electrode material layer is removed, the strength of the negative electrode material layer is increasing due to the hardening of the binder, and adhesiveness between particles and between the particles and the current collector can be improved. The heat treatment may be performed in an inert atmosphere of helium, argon, nitrogen, or the like or in a vacuum atmosphere in order to prevent oxidation of the current collector during the treatment.

After forming the negative electrode material layer on the current collector, press treatment may be performed. By the press treatment, the electrode density of the negative electrode can be adjusted. The electrode density of the negative electrode is not particularly limited, and may be from 1.5 g/cm³ to 1.9 g/cm³, or may be from 1.6 g/cm³ to 1.8 g/cm³. As the electrode density becomes higher, a volume capacity of the negative electrode tends to be improved, adhesiveness of the negative electrode material layer to the current collector tends to be improved and the cycle characteristics tend to be improved. The press treatment is preferably performed before performing the heat treatment.

A lithium-ion secondary battery manufactured by the above-mentioned method may include; the negative electrode produced by the above-mentioned method; a cathode; and an electrolyte. The lithium-ion secondary battery may be configured, for example, so that the negative electrode and the cathode are disposed to face each other with a separator interposed therebetween, and an electrolytic solution containing an electrolyte is injected.

The cathode may be an electrode manufactured by forming a cathode layer on a surface of the current collector in the same manner as the negative electrode. As the current collector, it is possible to use a material such as a strip-shaped foil, a strip-shaped perforating foil, or a strip-shaped mesh made of a metal or alloy such as aluminum, titanium, or stainless steel.

A cathode material included in the cathode layer is not particularly limited. Examples thereof include metal compounds, metal oxides, metal sulfides, and conductive polymer materials which can be doped or intercalated with lithium-ions. Furthermore, it is possible to use one or two or more kinds in combination from lithium cobalt oxide (LiCoO₂), lithium nickel oxide (LiNiO₂), lithium manganate (LiMnO₂), and complex oxides thereof (LiCoₓNi_{y}Mn_{z}O₂, x + y + z = 1, 0 < x, 0 < y; LiNi₂₋ₓMnₓO₄, 0 < x ≤ 2), lithium manganese spinel (LiMn₂O₄), lithium vanadium compounds, V₂O₅, V₆O₁₃, VO₂, MnO₂, TiO₂, MoV₂O₈, TiS₂, V₂S₅, VS₂, MoS₂, MoS₃, Cr₃O₈, Cr₂O₅, olivine type LiMPO₄ (M: Co, Ni, Mn, Fe), conductive polymers such as polyacetylene, polyaniline, polypyrrole, polythiophene, and polyacene, porous carbon, and the like. Among them, lithium nickel oxide (LiNiO₂) and a complex oxide thereof (LiCoₓNi_{y}Mn_{z}O₂, x + y + z = 1, 0 < x, 0 < y; LiNi₂₋ₓMnₓO₄, 0 < x ≤ 2) have a high capacity, and thus are suitable as cathode materials.

Examples of separators include non-woven fabrics, cloth, microporous film, and a combination thereof that contain a polyolefin such as polyethylene or polypropylene as a main component. When the lithium-ion secondary battery has a structure in which the cathode and the negative electrode are not in contact with each other, it is not necessary to use the separator.

As the electrolytic solution, it is possible to use so-called organic electrolyte solutions in which a lithium salt such as LiClO₄, LiPF₆, LiAsF₆, LiBF₄, or LiSO₃CF₃ is dissolved in a non-aqueous solvent containing a single component or a mixture of two or more components such as ethylene carbonate, propylene carbonate, butylene carbonate, vinylene carbonate, fluoroethylene carbonate, cyclopentanone, sulfolane, 3-methylsulfolane, 2,4-dimethylsulfolane, 3-methyl-1,3-oxazolidin-2-one, γ-butyrolactone, dimethyl carbonate, diethyl carbonate, ethyl methyl carbonate, methyl propyl carbonate, butyl methyl carbonate, ethyl propyl carbonate, butyl ethyl carbonate, dipropyl carbonate, 1,2-dimethoxyethane, tetrahydrofuran, 2-methyltetrahydrofuran, 1,3-dioxolane, methyl acetate, and ethyl acetate. Among them, the electrolytic solution containing fluoroethylene carbonate is suitable because it tends to form a stable SEI (solid electrolyte interface) on a surface of the negative electrode material and the cycle characteristics is significantly improved.

A form of the lithium-ion secondary battery is not particularly limited, and examples thereof include a paper type battery, a button type battery, a coin type battery, a laminate type battery, a cylindrical type battery, a prismatic battery and the like. Furthermore, the negative electrode material for lithium-ion secondary battery can be applied not only to the lithium-ion secondary battery, but also to all electrochemical devices other than the lithium-ion secondary battery such as a hybrid capacitor having a charging and discharging mechanism that inserts and desorbs lithium-ions.

### EXAMPLES

Hereinafter, the above-mentioned embodiment will be described more specifically based on examples, but the above-mentioned embodiments are not limited to the following examples.

### [Example 1]

### (Formation of Molded product)

Raw needle coke with the average particle size of 11 µm and the standard deviation of the particle size distribution of 0.25 that was not heat-treated was used as the aggregate, and the following materials were used as raw materials. The average particle size of the aggregate and the negative electrode material, and the standard deviation of the particle size distribution of the aggregate were measured using a particle size distribution measuring device (Shimadzu Corporation, SALD-3000) that uses a laser diffraction/scattering method. The standard deviation of the particle size distribution of the aggregate is a standard deviation defined on a logarithmic scale. The raw materials shown below were mixed without heating in the mixing ratio and conditions shown in Table 1 to prepare a mixture. The obtained mixture was then molded by uniaxial pressing at room temperature to obtain a molded product of 10 mm x 10 mm x 50 mm.
- Aggregate... Raw needle coke with the average particle size of 11 µm and the standard deviation of the particle size distribution of 0.25
- Binder... Starch (10 parts by mass per 100 parts by mass of coke)
- Water (33.2 parts by mass per 100 parts by mass of needle coke)

The molded product was then heat-treated in a nitrogen atmosphere at 800°C to 850°C for 8 hours to obtain a fired product. The fired product was then graphitized at 2600°C to 3100°C for 30 hours to obtain a graphitized product. The graphitized product was ground to obtain the graphite powder of Example 1 (negative electrode material for lithium-ion secondary battery).

The density (g/cm³) of the molded product, the density (g/cm³) of the fired product, and the density (g/cm³) of the graphitized product obtained in the above steps are shown in Table 1.

### (Evaluation of Bending Test Force)

The bending test force (N) of the molded product was measured as follows.

Specifically, a mixture of the composition shown in Table 1 was used and molded at room temperature to obtain a molded product of 10 mm x 10 mm x 50 mm. The density (g/cm³) of the obtained molded product is shown in Table 1. Using the molded product and an autograph manufactured by Shimadzu Corporation, a three-point bending test was performed at a test speed of 10 mm/min and a support distance of 7 mm, and the bending test force (N) required for destruction was measured.

The results are shown in Table 1.

### (Evaluation of Moldability)

Three molded products were produced in the same manner as in Example 1. Of the three molded products produced, the number of molded products that had chips of 1 mm or more when carried was evaluated. A number of 0 means that none of the molded products produced had such chips, and a number of 3 means that all of the molded products produced had such chips.

The results are shown in Table 1.

### (Evaluation of Large-Scale Moldability)

The obtained mixture was molded at room temperature to obtain a large-scale molded product of 150 mm x 300 mm x 100 mm. The obtained large-scale molded product was evaluated as being large-scale moldable if it could be lifted with both hands without any large cracks or chips, or it was evaluated as not being large-scale moldable if large cracks or chips occurred when attempting to lift the molded product with both hands, or if the molded product could not be lifted with both hands.

### (Calculation of Residual Carbon Ratio)

The residual carbon ratio was calculated based on the following formula. When starch was used as a binder, the mass of carbon derived from the binder was set to 20% by mass of the charge amount, and when tar pitch was used as the binder, the mass of carbon derived from the binder was set to 50% by mass of the charge amount. Residual carbon ratio (%) = [mass of carbon derived from binder / (mass of carbon derived from binder + mass of carbon derived from coke)] x 100

### [Examples 2 to 8]

### (Formation of Molded Product)

The raw needle coke used in Example 1 was heat-treated in a nitrogen atmosphere at 800°C to 850°C for 8 hours to produce a fired needle coke, which was used in Examples 2 to **8. In** addition, the following materials were used as raw materials. The following raw materials were mixed without heating in the proportions and conditions shown in Table 1 to prepare a mixture. Next, the graphite powder (negative electrode material for lithium-ion secondary battery) of each of Examples 2 to 8 was obtained using the obtained mixture by the same procedure as in Example 1. The density (g/cm³) of the molded product, the density (g/cm³) of the fired product, and the density (g/cm³) of the graphitized product which were obtained, are shown in Table 1.
- Aggregate... Needle coke with the average particle size of 10 µm and the standard deviation of the particle size distribution of 0.24
- Binder... Starch (amount shown in Table 1)
- Water (amount shown in Table 1)

### [Example 9]

Graphite powder (negative electrode material for lithium-ion secondary battery) of Example 9 was obtained in the same manner as in Example 1, except that the amount of water in Example 1 was changed to the amount shown in Table 1. The density (g/cm³) of the molded product, the density (g/cm³) of the fired product, and the density (g/cm³) of the graphitized product which were obtained, are shown in Table 1.

### [Examples 10 and 11]

Graphite powder (negative electrode material for lithium-ion secondary battery) of each of Examples 10 and 11 was obtained in the same manner as in Example 1, except that the amount of water in Example 1 was changed to the amount shown in Table 1, the kneading time was changed to the time shown in Table 1, and the molding method was changed to an extrusion molding. The density (g/cm³) of the molded product, the density (g/cm³) of the fired product, and the density (g/cm³) of the graphitized product which were obtained, are shown in Table 1.

The molded products obtained in Examples 2 to 11 were evaluated in the same manner as in Example 1. The results are shown in Table 1. In the table, "-" means no data.

### [Comparative Example 1]

### (Formation of Molded Product)

Raw needle coke with the average particle size of 11 µm and the standard deviation of particle size distribution of 0.25 that was not heat-treated was used as aggregate, and the following materials were used as raw materials. The following raw materials were mixed while heating at 140°C in the mixing ratio and conditions shown in Table 2 to prepare a mixture. Next, the graphite powder (negative electrode material for lithium-ion secondary battery) of Comparative Example 1 was obtained using the obtained mixture by the same operation as in Example 1. The density (g/cm³) of the molded product, the density (g/cm³) of the fired product, and the density (g/cm³) of the graphitized product which were obtained, are shown in Table 2.
- Aggregate... Raw needle coke with the average particle size of 11 µm and the standard deviation of particle size distribution of 0.25
- Binder... Tar pitch (10 parts by mass per 100 parts by mass of coke)
- Aromatic compound... Methylnaphthalene-containing additive (total content of aromatic compound is 77% by mass or more, 3 parts by mass per 100 parts by mass of coke)

The molded product obtained in Comparative Example 1 was evaluated in the same manner as in Example 1. The results are shown in Table 1.

### [Comparative Examples 2 and 3]

### (Formation of Molded Product)

As in Examples 2 to 8, calcined needle coke was used as aggregate in Comparative Examples 2 and 3. Furthermore, the raw materials shown below were mixed while heating at 140°C in the mixing ratio and conditions shown in Table 2 to prepare a mixture. Next, the graphite powder (negative electrode material for lithium-ion secondary battery) of each of Comparative Examples 2 and 3 were obtained using the obtained mixture by the same operation as in Comparative Example 1. The density (g/cm³) of the molded product, the density (g/cm³) of the fired product, and the density (g/cm³) of the graphitized product which were obtained, are shown in Table 2.
- Aggregate...Needle coke with the average particle size of 10 µm and the standard deviation of the particle size distribution of 0.24
- Binder...Tar pitch (10 parts by mass per 100 parts by mass of coke)
- Aromatic compound...Methylnaphthalene-containing additive (total content of aromatic compounds is 77% by mass or more, 3 parts by mass or 7 parts by mass per 100 parts by mass of coke)

### [Comparative Example 4]

Graphite powder (negative electrode material for lithium-ion secondary battery) of Comparative Example 4 was obtained in the same manner as in Comparative Example 2, except that an aromatic compound was not used, the amount of tar pitch was changed to the amount shown in Table 2, and the molding method was changed to an extrusion molding. The density (g/cm³) of the molded product, the density (g/cm³) of the fired product, and the density (g/cm³) of the graphitized product which were obtained, are shown in Table 2.

The molded products obtained in Comparative Examples 2 to 4 were evaluated in the same manner as in Example 1. The results are shown in Table 2. In the table, "-" means no data.

**[Table 1]**

| | Example | Example | Example | Example | Example | Example | Example | Example | Example | Example | Example |
|---|---|---|---|---|---|---|---|---|---|---|---|
| | 1 | 2 | 3 | 4 | 5 | 6 | 7 | 8 | 9 | 10 | 11 |
| Binder | Starch | Starch | Starch | Starch | Starch | Starch | Starch | Starch | Starch | Starch | Starch |
| Solvent | Water | Water | Water | Water | Water | Water | Water | Water | Water | Water | Water |
| Coke calcination | No | Yes | Yes | Yes | Yes | Yes | Yes | Yes | No | No | Yes |
| Coke(parts by mass) | 100 | 100 | 100 | 100 | 100 | 100 | 100 | 100 | 100 | 100 | 100 |
| Starch(parts by mass) | 10 | 10 | 20 | 30 | 10 | 10 | 10 | 10 | 10 | 10 | 10 |
| Water(parts by mass) | 33.2 | 30 | 30 | 30 | 23.3 | 36.7 | 30 | 30 | 50 | 54 | 30 |
| Tar pitch(parts by mass) | | | | | | | | | | | |
| Aromatic compound(parts by mass) | | | | | | | | | | | |
| Residual carbon ratio(%) | 1.96 | 1.96 | 3.85 | 5.66 | 1.96 | 1.96 | 1.96 | 1.96 | 1.96 | 1.96 | 1.96 |
| Kneading time(min) | 6 | 3 | 3 | 3 | 3 | 3 | 1 | 15 | 6 | 10 | 10 |
| Heating | No | No | No | No | No | No | No | No | No | No | No |
| Molding method | Uniaxial press | Uniaxial press | Uniaxial press | Uniaxial press | Uniaxial press | Uniaxial press | Uniaxial press | Uniaxial press | Uniaxial press | Extrusion molding | Extrusion molding |
| Density of molded product(g/cm³) | 1.01 | 1.46 | 1.35 | 1.31 | 1.28 | 1.50 | 1.37 | 1.52 | 1.26 | 1.30 | 1.65 |
| Bending test force(N) | 1.18 | 2.13 | 2.17 | 2.43 | 1.03 | 2.40 | 1.63 | 2.31 | 2.30 | - | - |
| Moldability (number of chips) | 0 | 0 | 0 | 0 | 0 | 0 | 0 | 0 | 0 | - | - |
| Density of fired product(g/cm³) | 0.96 | 1.10 | 1.03 | 0.91 | 1.06 | 1.03 | 1.05 | 1.05 | 1.04 | 1.08 | 1.25 |
| Density of graphitized product(g/cm³) | 1.00 | 1.10 | 1.04 | 0.93 | 1.06 | 1.03 | 1.04 | 1.10 | 1.05 | 1.09 | 1.25 |
| Possibility of large-scale molding | Possible | Possible | Possible | Possible | Possible | Possible | Possible | Possible | Possible | Possible | Possible |

**[Table 2]**

| | Comparative Example | Comparative Example | Comparative Example | Comparative Example |
|---|---|---|---|---|
| | 1 | 2 | 3 | 4 |
| Binder | Pitch | Pitch | Pitch | Pitch |
| Solvent | Aromatic compound | Aromatic compound | Aromatic compound | |
| Coke calcination | No | Yes | Yes | Yes |
| Coke(parts by mass) | 100 | 100 | 100 | 100 |
| Starch(parts by mass) | | | | |
| Water(parts by mass) | | | | |
| Tar pitch(parts by mass) | 10 | 10 | 10 | 37 |
| Aromatic compound(parts by | 3 | 3 | 7 | |
| mass) | | | | |
| Residual carbon ratio(%) | 4.76 | 4.76 | 4.76 | 15.61 |
| Kneading time(min) | 1 | 1 | 1 | 1 |
| Heating | Yes | Yes | Yes | Yes |
| Molding method | Uniaxial press | Uniaxial press | Uniaxial press | Extrusion molding |
| Density of molded product(g/cm³) | 0.73 | 1.12 | 1.18 | 1.76 |
| Bending test force(N) | 0.08 | 0.18 | 0.21 | - |
| Moldability (number of chips) | 3 | 1 | 1 | - |
| Density of fired product(g/cm³) | 0.80 | 1.11 | 1.14 | 1.54 |
| Density of graphitized product(g/cm³) | 0.80 | 1.11 | 1.15 | 1.56 |
| Possibility of large-scale molding | Impossible | Impossible | Possible | Possible |

In Examples 1 to 9, the molded products tended to have superior bending test force (N) and the density of the graphitized product also tended to be lower than in Comparative Examples 1 to 3.

Furthermore, in Examples 1 to 9, chipping of the molded products was suppressed and large-scale molding was possible.

Furthermore, in Examples 10 and 11, which used an extrusion molding, the density of the graphitized product tended to be lower than in Comparative Example 4. Furthermore, in Examples 10 and 11, large-scale molding was possible.

All publications, patent applications, and technical standards mentioned in the present specification are incorporated herein by reference to the same extent as if each individual publication, patent application, or technical standard was specifically and individually indicated to be incorporated by reference.

## Claims

1. A method of manufacturing a negative electrode material for a lithium-ion secondary battery, the method comprising:
(a) a step of obtaining a mixture containing a graphitizable aggregate, and a graphitizable binder;
(b) a step of obtaining a molded product by molding the mixture;
(c) a step of obtaining a graphitized product by graphitizing the molded product; and
(d) a step of obtaining a ground product by grinding the graphitized product,
wherein the binder contains an aqueous binder containing a water-soluble or water-absorbent polymer compound.

2. The method of manufacturing a negative electrode according to claim 1, wherein in the step of obtaining the molded product, the mixture is molded to obtain a molded product having a density of 1.25 g/cm³ or more.

3. A method of manufacturing a negative electrode material for a lithium-ion secondary battery, the method comprising:
(a) a step of obtaining a mixture containing a graphitizable aggregate, and a graphitizable binder;
(b) a step of obtaining a molded product having a density of 1.25 g/cm³ or more by molding the mixture;
(c) a step of obtaining a graphitized product having a density of 1.20 g/cm³ or less by graphitizing the molded product; and
(d) a step of obtaining a ground product by grinding the graphitized product.

4. A method of manufacturing a negative electrode material for a lithium-ion secondary battery, the method comprising:
(a) a step of obtaining a mixture containing a graphitizable aggregate, and a graphitizable binder;
(b) a step of obtaining a molded product by molding the mixture with an extrusion molding;
(c) a step of obtaining a graphitized product having a density of 1.50 g/cm³ or less by graphitizing the molded product; and
(d) a step of obtaining a ground product by grinding the graphitized product.

5. The method of manufacturing a negative electrode according to claim 3 or 4, wherein the binder contains an aqueous binder containing a water-soluble or water-absorbent polymer compound.

6. The method of manufacturing a negative electrode according to any one of claims 1, 2 and 5, the water-soluble or water-absorbent polymer compound contains at least one selected from the group consisting of starch, amylose, amylopectin, polyacrylic acid, carboxymethylcellulose, polyvinyl alcohol, and water-soluble protein.

7. The method of manufacturing a negative electrode according to any one of claims 1, 2, 5 and 6, wherein a content rate of water in the mixture is from 10% by mass to 50% by mass with respect to a total amount of the mixture.

8. The method of manufacturing a negative electrode according to any one of claims 1 to 7, wherein a content rate of the binder in the mixture is from 3% by mass to 30% by mass with respect to a total amount of the mixture.

9. The method of manufacturing a negative electrode according to any one of claims 1 to 8, wherein the aggregate includes calcined coke.

10. The method of manufacturing a negative electrode according to any one of claims 1 to 9, wherein the aggregate includes unheat-treated raw coke.

11. A method of manufacturing a lithium-ion secondary battery, the method comprising: a step of manufacturing a negative electrode material by the method of manufacturing a negative electrode material for a lithium-ion secondary battery according to any one of claims 1 to 10; and a step of producing a negative electrode by using the negative electrode material for a lithium-ion secondary battery.
